**Europäisches Patentamt**

(19) **European Patent Office**    (11) Numéro de publication: **0 006 069**

**Office européen des brevets**    **B1**

(12)    **FASCICULE DE BREVET EUROPEEN**

(45) Date de publication du fascicule de brevet: **05.08.81**    (51) Int. Cl.³: **F 16 B 2/08**

(21) Numéro de dépôt: **79400358.2**

(22) Date de dépôt: **05.06.79**

(54) Organe de fixation du type collier de serrage.

| | |
|---|---|
| (30) Priorité: **06.06.78 FR 7816913** | (73) Titulaire: **CALMETTES, MARCHOU & Cie Société en nom collectif dite:** **20-24, rue des Plantes** **F-92500 Rueil-Malmaison (FR)** |
| (43) Date de publication de la demande: **12.12.79 Bulletin 79/25** | |
| | (72) Inventeur: **Marchou, Jacques, M.** **38 ter, rue Saint-Hilaire** **F-94210 La Varenne Saint-Hilaire (FR)** |
| (45) Mention de la délivrance du brevet: **05.08.81 Bulletin 81/31** | |
| (84) Etats Contractants Désignés: **DE GB NL** | (74) Mandataire: **Descourtieux, Philippe et al,** **CABINET BEAU de LOMENIE 55 rue d'Amsterdam** **F-75008 Paris (FR)** |
| (56) Documents cités: **DE - A - 1 500 795** **GB - A - 778 861** **GB - A - 932 116** | |

Courier Press, Leamington Spa, England.

## Organe de fixation du type collier de serrage

On connaît déja, en particulier par les brevets FR—A—2 314 384 et GB—A—778 861, de nombreux types de colliers de serrage, utilisés notamment dans la fabrication des appareils électro-ménagers ou dans la construction automobile, par exemple pour assurer le raccordement étanche de deux canalisations dont l'une est en matériau souple.

Le brevet français concerne un collier constitué par un élément de bande de matière souple, par exemple en métal, enroulé sur lui-même. Les extrémités d'un tel collier présentent, au moins sur leurs faces en regard, des moyens d'accrochage complémentaires quasi continus, par exemple des dents convenablement orientées. En général, ces extrémités sont maintenues au contact l'une de l'autre par une agrafe ou analogue permettant de conserver le collier dans sa position serrée.

La mise en place de ce genre d'organes de fixation est assurée généralement au moyen de pinces spéciales ou analogues dont les mâchoires coopèrent avec des moyens de préhension prévus sur l'extrémité non recouverte de la bande par suite de l'enroulement en empêchant, par tout moyen approprié, cette dernière de glisser sur l'objet à serrer. C'est ainsi, par exemple, que le brevet britannique précité prévoit notamment, à titre de moyen de préhension, aux extrémités de la bande, des reliefs obtenus par exemple par emboutissage. Toutefois, le collier proposé par ce brevet ne permet aucunement de pré-determiner l'effort de serrage.

Le collier faisant l'objet du brevet français précité permet de serrer avec la précision nécessaire, et d'appliquer rapidement un serrage déterminé, comme cela apparaît utile, notamment dans la construction automobile. En outre l'obtention de ce résultat est rendue visible par un simple examen du collier, de sorte que l'on dispose d'une "visualisation de la contrainte".

Toutefois, ce collier antérieur nécessite, en raison de la conformation des moyens de préhension sur le brin externe du collier, une déchirure d'une partie de la bande. Il en résulte un risque d'agressivité pour l'utilisateur qui peut se blesser lorsque ses mains rencontrent l'extrémité déchirée du collier.

D'autre part, le brevet français avait prévu l'utilisation successive de plusieurs moyens de préhension situés sur le brin externe de la bande, notamment en vue de permettre un resserrage du collier. Toutefois, ce resserrage ne pouvait être effectué que sous un couple supérieur à celui du serrage initial en raison de la nature des moyens de préhension prévus.

La présente invention apporte des perfectionnements aux colliers connus et notamment à ceux décrits par le brevet français précité en vue d'éliminer en particulier les deux inconvénients qui viennent d'être évoqués.

Conformément à l'invention, l'un au moins des moyens de préhension disposés aux deux extrémités de la bande, de préférence celui situé sur l'extrémité du brin extérieur de la bande, est constitué, de façon connue en soi, par un relief formé dans la bande, par exemple par emboutissage, la zone de raccordement du relief avec la bande constituant une zone de résistance mécanique inférieure à celle de la bande et étant destinée à être rompue par l'outil de serrage, lorsque l'effort de serrage a atteint une valeur prédéterminée.

La mise en oeuvre de l'invention n'exige aucun outillage compliqué, ni pour sa fabrication ni pour son utilisation. En particulier la fabrication connue des colliers de serrage par matriçage, emboutissage ou procédé analogue se prête bien à la réalisation de l'invention. Quant à l'outil de serrage, il suffit qu'il possède, comme cela est connu, des organes complémentaires des moyens de préhension pour coopérer avec les extrémité de la bande. L'invention sera mieux comprise et ses caractéristiques secondaires ainsi que ses avantages apparaîtront au cours de la description qui va suivre d'un mode de réalisation avantageux, en référence au dessin annexé, dans lequel:

— la figure 1 représente une vue en perspective d'un collier de serrage selon l'invention, avant son montage.

— la figure 2 représente une vue en perspective du même collier après son serrage, le manchon à serrer n'étant pas représenté.

— la figure 3 est une vue en coupe d'un relief avantageux formé dans la bande.

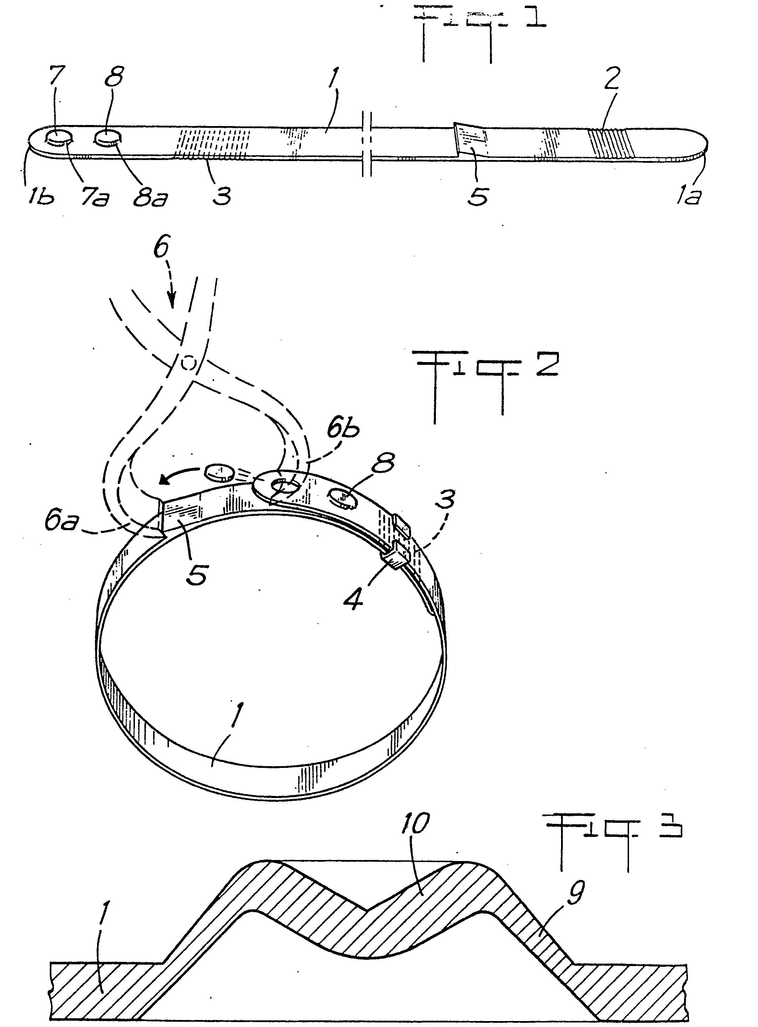

Tel qu'il est représenté, un collier est constitué essentiellement par une bande plate 1, par exemple en métal, de largeur constante. Chacune de ses extrémités $1a$ et $1b$ présente des zones dentées 2 et 3, destinées à coopérer l'une avec l'autre après enroulement de la bande sur l'objet à serrer. Si nécessaire, le maintien en prise des dents est assuré par une agrafe 4 ou analogue, visible sur la figure 2, mise en place en général avant le serrage.

En arrière de la zone dentée 2, par rapport à l'extrémité $1a$ correspondante, est prévue au moins une aspérité 5, par exemple emboutie, constituant un moyen de préhension, plus précisément un point d'appui pour l'une des mâchoires $6a$ d'un outil de serrage 6 visible sur la figure 2. L'autre mâchoire $6b$ coopérera avec l'extrémité $1b$ correspondant à la zone dentée 3 dans des conditions qui seront décrites plus loin.

Entre l'extrémité $1b$ et la zone dentée 3, laquelle est disposée sur la face de la bande 1, non visible sur la figuré 1, et destinée à constituer la face interne du collier visible sur la figure 2, est prévue une partie plane comportant des éléments susceptibles d'être appréhendés par l'outil de serrage.

A cet effet, sur la réalisation donnée à titre d'exemple il est prévu deux bossages 7 et 8 formant des reliefs sur la face extérieure du brin externe du collier après l'enroulement de la bande. Ils sont situés, de préférence, sur l'axe longitudinal de la bande, sont obtenus par exemple par emboutissage et présentent une forme sensiblement tronconique, ou éventuellement cylindrique ou sphérique. La diamètre de la zone de raccordement 7a—8a des bossages avec le plan de la bande 1 est déterminé de telle façon que cette zone présente une résistance mécanique, notamment à l'arrachement, inférieure à celle de la bande elle-même. Ce diamètre détermine d'autre part, comme on le verra plus loin, le degré de serrage du collier après sa mise en place.

Chaque bossage 7—8 constitue donc un moyen de préhension de l'extrémité externe de la bande par la mâchoire 6b de l'outil de serrage.

Pour la mise en place du collier, l'outil de serrage 6 est disposé comme représenté schématiquement sur la figure 2, sa mâchoire 6a prenant appui sur l'epaulement 5, tandis que la mâchoire 6b coiffe le bossage terminal 7.

Au cours du serrage, les dents des deux zones 2 et 3 engrènent successivement les unes avec les autres. Lorsque l'effort de serrage exercé par l'outil devient trop important, la resistance mécanique de la zone de raccordement 7a du bossage 7 devient insuffisante pour le supporter.

La calotte du bossage 7 est alors arrachée ou découpée et la mâchoire 6b n'est plus en prise avec la bande. Un trou apparaît alors à la place du bossage 7. La mise en place du collier est terminée et il reste dans sa position serrée par coopération des dents des zones 2 et 3. La mâchoire 6b du collier assure un ébarbage convenable du bord du trou, remplaçant le bossage 7, qui ne présente donc aucun danger pour l'utilisateur; la simple vue de ce trou permet de contrôler que le serrage du collier a été effectué sous l'effort voulu.

L'existence du deuxième bossage 8 permet, si nécessaire, de recommencer l'opération de serrage, par exemple après un certain temps d'utilisation de l'organe serré. Cette disposition est particulièrement utile dans le cas du serrage des conduits flexibles véhiculant des fluides sous pression. A cet égard, le deuxième bossage 8 sera généralement identique au premier bossage 7, mais dans certains cas, il sera avantageux de prévoir un bossage 8 dont la résistance mécanique de la zone de raccordement 8a est supérieure à celle de la zone de raccordement 7a.

Il convient également de souligner une disposition avantageuse concernant la forme des bossages 7 et 8.

Ainsi qu'on le voit sur la figure 3, un bossage comporte, outre sa partie extérieure 9 sensiblement tronconique, une cuvette intérieure 10.

Cette disposition permet; pour un diamètre donné de la zone de raccordement du bossage à la bande 1, d'augmenter la résistance à l'arrachement. C'est ainsi, par exemple, qu'un bossage d'un diamètre de 5mm cylindrique ou conique, formé dans une bande métallique d'épaisseur égale à 0.8 mm., oppose une résistance de 1500 N environ à l'arrachement. La présence d'une cuvette intérieure permet d'augmenter cette résistance jusqu'à 2500 N environ. Bien entendu, le diamètre et la profondeur de la cuvette 10 seront déterminés en fonction de la résistance à l'arrachement souhaitée, c'est-à-dire finalement en fonction de l'effort de serrage désiré du collier.

Bien entendu, il est évident que l'on peut prévoir dans certains cas particuliers un, deux ou plusieurs bossages ou reliefs successifs dont les zones de raccordement, dans le plan de la bande, créent une zone de résistance mécanique inférieure à celle de la bande elle-même. D'autre part, les reliefs ou bossages qui ont été décrits pourraient être disposés sur la face interne du brin externe du collier, ou même sur le brin interne de celui-ci en replacement de l'épaulement 5.

Enfin, il est également évident que l'invention n'est pas limitée aux dispositions décrites pour réaliser l'accrochage des deux extrémités de la bande, mais couvre au contraire tous les cas possibles d'application de la visualisation de la contrainte au moyen de reliefs supprimés au cours du serrage.

## Revendications

1. Organe de fixation du type collier de serrage, constitué par une bande (1) destinée à être enroulée sur elle-même et dont les extrémités (1a, 1b) des brins intérieur et extérieur présentent des moyens d'accrochage complémentaires, quasi continus, tels que des dents (2, 3) convenablement orientées, chacune des extrémités comportant d'autre part au moins un moyen de préhension permettant d'effecteur le serrage et la mise en coopération des moyens d'accrochage à l'aide d'un outil (6) approprié en forme de pince ou analogue, l'un des moyens de préhension présentant une zone de résistance mécanique inférieure à celle de la bande (1), destinée à être rompue par l'outil au cours du serrage lorsque l'effort de serrage a atteint une valeur prédéterminée, caractérisé en ce que ce moyen de préhension, situé de préférence sur l'extrémité (1b) du brin extérieur (1b) de la bande (1), est constitué par un relief (7) formé dans la bande (1), la zone de raccordement (7a) du relief (7) avec la bande (1) constituant la zone de résistance mécanique inférieure à celle de la bande (1).

2. Organe de fixation selon la revendication 1, caractérisé en ce que le brin extérieur (1b) de la bande (1) comporte au moins deux reliefs (7, 8) de préférence identiques, et disposés suivant l'axe longitudinal de la bande (1).

3. Organe de fixation selon l'une quelconque des revendications 1 et 2, caractérisé en ce qu'un relief (7) est constitué par une déformation sensiblement tronconique de la bande (1).

4. Organe de fixation selon l'une quelconque des revendications 1 à 3, caractérisé en ce que le relief (7) est situé sur la face extérieure de la bande (1).

5. Organe de fixation selon l'une quelconque des revendications 1 à 3, caractérisé en ce que le relief est situé sur la face intérieure de la bande (1).

6. Organe de fixation selon l'une quelconque des revendications prédécentes, caractérisé en ce qu'un relief (7) comporte une partie extérieure (9) sensiblement tronconique et une partie intérieure (10) en forme de cuvette.

## Patentansprüche

1. Festlegeeinrichtung nach Art einer Klemmschelle, die durch ein Band (1) gebildet ist, welches zum Herumlegen um sich selbst ausgelegt ist und dessen inneres und äusseres Ende (1a, 1b) komplementäre Festlegeeinrichtungen, gewissermassen fortlaufend, wie entsprechend orientierte Zähne (2, 3) aufweisen, wobei jedes Ende andererseits mit mindestens einer Angriffseinrichtung zum Bewirken des Schliessens und des Zusammenwirkens der Festlegeeinrichtungen mit Hilfe eines geeigneten Werkzeuges (6) in der Form einer kleinen Zange oder dergleichen versehen ist, wobei eine der Angriffseinrichtungen einen Bereich mechanischen Wilderstandes bildet, der geringer ist als jener des Bandes (1) und zum Abbrechen mittels des Werkzeuges während des Schliessens ausgelegt ist, wenn die Schliesskraft einen vorbestimmten Wert erreicht hat, dadurch gekennzeichnet, dass diese Angriffseinrichtung, die vorzugsweise am äusseren Ende (1b) des Bandes (1) angeordnet ist, durch eine an dem Band (1) angeformte Erhöhung (7) gebildet ist, wobei der Verbindungsbereich (7a) der Erhebung (7) mit dem Band (1) einen Bereich mechanischen Widerstandes bildet, der geringer als jener des Bandes (1) ist.

2. Festlegeeinrichtung nach Anspruch 1, dadurch gekennzeichnet, dass der äussere Teil (1b) des Bandes (1) zumindest zwei, vorzugsweise identische Erhöhungen (7, 8) aufweist, die der Längsachse des Bandes (1) folgend angeordnet sind.

3. Festlegeeinrichtung nach einem der Ansprüche 1 und 2, dadurch gekennzeichnet, dass eine Erhöhung (7) durch eine im wesentlichen kegelstumpfförmige Verformung des Bandes (1) gebildet ist.

4. Festlegeeinrichtung nach einem der Ansprüche 1 bis 3, dadurch gekennzeichnet, dass die Erhöhung (7) auf der äusseren Oberfläche des Bandes (1) angeordnet ist.

5. Festlegeeinrichtung nach einem der Ansprüche 1 bis 3, dadurch gekennzeichnet, dass die Erhöhung auf der inneren Oberfläche des Bandes (1) angeordnet ist.

6. Festlegeeinrichtung nach einem der Ansprüche 1 bis 5, dadurch gekennzeichnet, dass eine Erhöhung (7) einen äusseren (9), im wesentlichen kegelstumpfförmigen Teil und einen inneren Bereich (10) in Form einer Schale oder eines Napfes aufweist.

## Claims

1. Fastening device of the clamp type, constituted by a strap (1) which is meant to be wound and of which the extreme internal and external free ends (1a, 1b) are provided with complementary anchoring means, virtually continuous, such as suitably directed teeth (2, 3), each extreme end further comprising at least a gripping means permitting to effect the tightening and to bring the anchoring means into cooperation, by way of an appropriate tool such as tongs or the likes, one of the gripping means having an area of mechanical resistance which is less than that of the strap and which is meant to be broken by the tool when the tightening force has reached a predetermined value, characterised in that said gripping means, preferably situated on the extreme external free end (1b) of the strap (1), is constituted by a relief (7) formed in the strap (1), the area (7a) joining the relief (7) to the strap constituting the mechanical resistance area which is less than that of the strap (1).

2. Fastening device according to claim 1, characterised in that the external free end (1b) of the strap (1) comprises at least two reliefs (7, 8), preferably identical, and situated along the longitudinal axis of the strap (1).

3. Fastening device according to any one of claims 1 and 2, characterised in that a relief (7) is constituted by a substantially truncated cone-shaped deformation of the strap (1).

4. Fastening device according to any one of claims 1 to 3, characterised in that the relief (7) is situated on the outer face of the strap (1).

5. Fastening device according to any one of claims 1 to 3, characterised in that the relief is situated on the inner face of the strap (1).

6. Fastening device according to any one of the preceding claims, characterised in that a relief (7) comprises a substantially truncated cone-shaped outer portion (9) and a cup-shaped inner portion (10).

Fig. 1

Fig. 2

Fig. 3

1